# FASCICULE DE BREVET EUROPEEN

(11) **EP 0 890 723 B1**
(45) Date de publication et mention de la délivrance du brevet: **13.11.2002**
(21) Numéro de dépôt: 98401672.5
(22) Date de dépôt: 03.07.1998
(51) Int. Cl.: F02D 41/06, F01N 3/20

(54) **Procédé de contrôle d'un moteur à combustion interne**
Verfahren zum Steuern einer Brennkraftmaschine
Method for controlling an internal combustion engine

(30) Priorité: 08.07.1997 FR 9708685
(43) Date de publication de la demande: 13.01.1999
(73) Titulaire: Renault s.a.s., 92100 Boulogne Billancourt (FR)
(72) Inventeur: Caron, Guillaume, 93310 Le Pre St Gervais (FR); Taupin, Jean-Marie, 92140 Clamart (FR); Simon, Edouard, 75007 Paris (FR)

(56) Documents cités:
- DE-A- 4 308 813
- DE-A- 19 538 732
- US-A- 5 483 946
- US-A- 5 531 069

## Description

L'invention concerne un procédé de contrôle d'un moteur à combustion interne, d'un véhicule automobile à allumage et injection pilotés électroniquement, équipé d'un pot catalytique dont le but est de filtrer les émissions de polluants en sortie du pot des gaz d'échappement.

Les normes internationales d'anti-pollution devenant de plus en plus sévères, imposent l'application de stratégies de contrôle du fonctionnement du moteur qui sont de plus en plus complexes. Plusieurs de ces stratégies visent à accélérer la mise en action, ou amorçage du pot catalytique, et sont mises en oeuvre à l'instant même du démarrage, ou peu après pour que le pot catalytique atteigne sa température minimale de fonctionnement, voisine de 300°C, en moins d'une minute. Ces stratégies doivent simultanément être adaptées aux besoins du conducteur du véhicule, en termes d'agrément de conduite.

Actuellement, il existe plusieurs stratégies d'accélération de l'amorçage du pot catalytique, qui sont gérées indépendamment les unes des autres, leurs conditions d'activation étant généralement fonction de la température d'eau du moteur ou du temps écoulé à partir du démarrage. Ces différentes stratégies sont par exemple :
- le retrait d'avance, c'est-à-dire que la commande d'allumage applique une avance à l'allumage qui est inférieure à l'avance optimale ;
- l'action sur la richesse, pour la maintenir à la stoechiométrie ou à une valeur inférieure pour obtenir un mélange pauvre ;
- l'accélération du régime de ralenti ;
- l'application d'une répartition volontaire de richesse entre les différents cylindres du moteur, dans lesquels la composition des gaz est variable.

Le nombre important de ces stratégies de commande du moteur, qui sont appliquées avec plus d'intensité, pose le problème de leur temps d'application et de leur séquencement.

Un autre inconvénient de l'application actuelle de ces stratégies vient de leur dépendance soit à la température d'eau du moteur, qui ne permet pas une représentation physique du besoin réel en énergie du pot catalytique, soit au temps écoulé à partir du démarrage du moteur, qui n'est pas non plus significatif du besoin du moteur ni adapté à tous les types de conduite. Ainsi, alors que la norme EURO 2000 impose l'application de stratégies d'amorçage du pot lors d'un démarrage à 20°C, il n'est pas correct d'appliquer ces mêmes stratégies à un moteur dont la température d'eau passe par 20°C après avoir démarré à -20°C. De même, en fonction du style de conduite, la température d'eau s'élève plus ou moins vite, de sorte que les deux paramétrages simultanés sont mauvais.

Pour cela, l'invention propose un procédé de contrôle du moteur, pilotant le séquencement de différentes stratégies de contrôle, dont le but particulier est d'accélérer l'amorçage du pot catalytique. A cet effet, l'objet de l'invention est un procédé de contrôle d'un moteur de véhicule automobile équipé d'un pot d'échappement des gaz résultant de la combustion du mélange air-carburant introduit dans le moteur, de type catalytique destiné à atteindre des objectifs de dépollution de ces gaz, l'allumage et l'injection du moteur étant pilotés électroniquement, comprenant un ensemble de stratégies de pilotage du fonctionnement du moteur, caractérisé en ce que le séquencement de ces différentes stratégies est géré par un automate, comprenant plusieurs phases distinctes de mise en action du moteur, correspondant chacune à l'application ou à la désactivation de chaque stratégie de pilotage, chaque phase étant comprise entre deux seuils de transition, minimal et maximal, qui sont définis par deux valeurs prises par une variable, appelée compteur, représentative de l'énergie dégagée par la combustion du mélange air-carburant dans le moteur depuis son démarrage, et qui varient en fonction de la température d'eau du moteur mémorisée au démarrage, et en ce que le positionnement dans une phase est déterminé par la valeur du compteur.

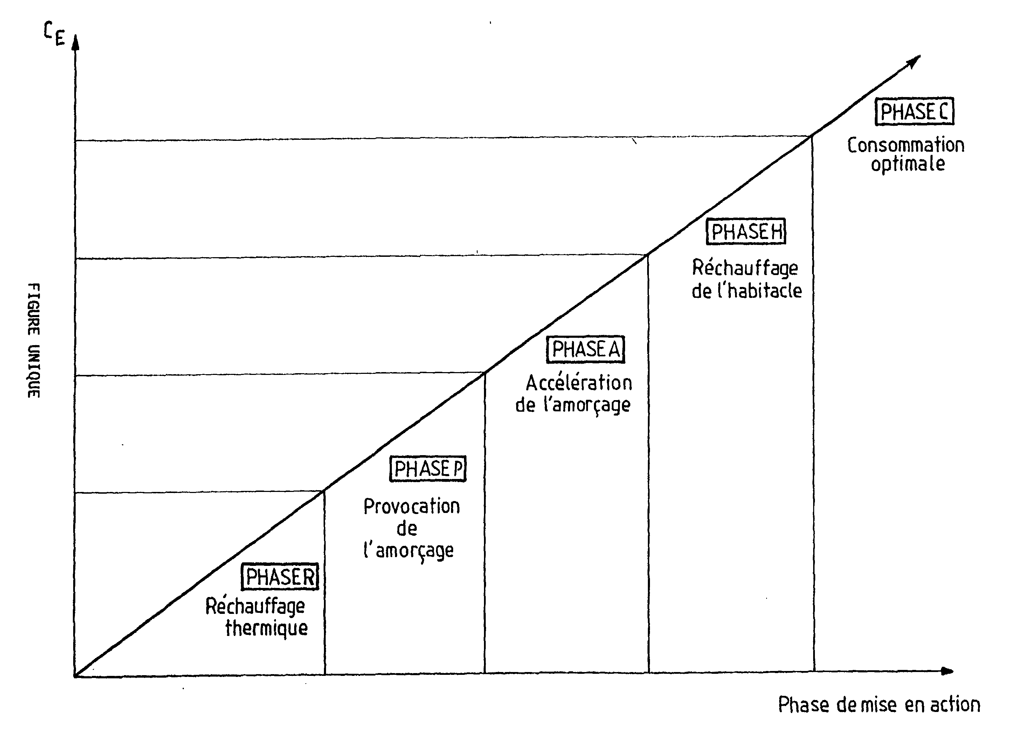

D'autres caractéristiques et avantages de l'invention apparaîtront à la lecture de la description qui suit, illustrée par la figure unique, qui est un exemple de séquencement de différentes phases de mise en action selon le procédé de contrôle, objet de l'invention.

Le procédé de contrôle d'un moteur de véhicule automobile équipé d'un pot catalytique, dont le rôle est de brûler les gaz d'échappement pour réduire les émissions de polluants, met en oeuvre un ensemble de stratégies de pilotage du moteur, pouvant agir sur trois paramètres essentiellement, la quantité d'air admise dans le collecteur par commande d'un papillon motorisé ou d'une vanne d'air additionnelle dans un boîtier papillon, la richesse du mélange air-carburant par commande du temps d'injection du carburant dans les cylindres, et l'avance à l'allumage.
L'ensemble de ces stratégies permet d'accélérer l'amorçage du pot catalytique, qui doit atteindre environ 300°C en moins d'une minute, même dans les cas de démarrage à froid, pour des températures inférieures à 20°C.

Selon l'invention, le séquencement de ces différentes stratégies est géré par un automate, appelé automate de mise en action, comprenant plusieurs phases distinctes de mise en action du moteur. La figure unique est un exemple de séquencement, non limitatif, constitué par cinq phases successives distinctes. Le positionnement dans chaque phase de l'automate détermine l'application ou la désactivation de chacune des stratégies concernées, qui ne sont plus gérées indépendamment les unes des autres comme c'était le cas avec les solutions antérieures.

Chaque phase de mise en action est comprise entre deux seuils de transition, l'un minimal et l'autre maximal, qui sont définis par une variable, appelée compteur C_{E}, représentative de l'énergie dégagée par la combustion du mélange air-carburant dans le moteur depuis son démarrage. Ainsi, le positionnement dans une des phases est déterminé par la valeur du compteur.

Selon une caractéristique fondamentale de l'invention, ces seuils de transition varient en fonction de la température d'eau du moteur mémorisée au démarrage, ce qui permet de tenir compte des phénomènes physiques réels de fonctionnement du moteur, qui ne sont pas les mêmes pour des températures négatives ou pour des températures supérieures à 20°C.

Selon l'invention, le compteur C_{E}, représentatif de l'énergie dégagée par la combustion du mélange air-carburant dans le moteur depuis son démarrage, est une variable proportionnelle au nombre de révolutions effectuées par le moteur depuis son démarrage. Ce nombre de révolutions, ou tours, du moteur depuis son démarrage est délivré par un capteur de tours, qui est avantageusement celui à partir duquel est calculé le régime du moteur. Le procédé ne nécessite donc pas de capteur supplémentaire, le régime moteur étant une information indispensable au contrôle du moteur par le calculateur électronique.

Selon une autre caractéristique, le compteur C_{E}, représentatif de l'énergie dégagée par la combustion du mélange air-carburant dans le moteur depuis son démarrage, peut être une variable proportionnelle à la quantité de carburant consommée par le moteur depuis son démarrage. Cette consommation de carburant est calculée à partir des temps d'injection écoulés depuis le démarrage. Ce calcul étant effectué par le calculateur électronique d'injection, il ne nécessite pas non plus de circuit supplémentaire.

Le compteur C_{E} peut être également une variable proportionnelle à la quantité d'air admise dans le moteur depuis son démarrage. Cette quantité d'air est alors calculée à partir de l'information délivrée soit par un capteur de pression placé dans le collecteur d'admission d'air, dont le rôle est de délivrer la pression collecteur au calculateur électronique, soit par un débitmètre placé dans le circuit d'admission d'air.

Selon une caractéristique fondamentale du procédé, objet de l'invention, lorsque le moteur démarre à une température d'eau telle que l'application de stratégies d'amorçage du pot catalytique est jugée nécessaire à la réalisation des objectifs de dépollution prédéterminés, le séquencement des stratégies de pilotage du fonctionnement du moteur comprend au moins deux phases principales de mise en action du moteur, se déroulant dans l'ordre suivant:
- une phase R concernant le réchauffage thermique du pot catalytique ;
- une phase C concernant le réglage de la consommation du moteur en carburant à une valeur minimale.

Selon la température d'eau au démarrage, le procédé comprend de plus une des deux phases supplémentaires suivantes, s'intercalant entre les deux phases précédentes référencées respectivement phase R et phase C:
- une phase P destinée à provoquer thermiquement et chimiquement l'amorçage du pot catalytique ;
- une phase A destinée à l'accélération thermique et chimique de l'amorçage du pot catalytique.

Une phase H optionnelle, destinée à favoriser un réchauffage rapide de l'habitacle du véhicule, peut être placée entre la phase A destinée à l'accélération thermique et chimique de l'amorçage du pot catalytique et la phase C concernant le réglage de la consommation minimale du moteur en carburant.

Au cours des quatre premières phases R, P, A et H, dans le cas où le moteur fonctionne avec un régime de ralenti, sont appliquées les stratégies de pilotage suivantes :
- augmentation du régime de ralenti du moteur, afin d'augmenter le débit des gaz traversant le pot d'échappement;
- augmentation de la quantité d'air admise au ralenti de façon à assurer l'augmentation du régime.
Cette augmentation de la quantité d'air admise dans le collecteur d'admission du moteur est limitée par l'ouverture maximale du boîtier papillon placé à l'entrée du circuit d'admission d'air, que ce boîtier soit constitué d'un papillon motorisé ou comprenne une vanne d'air additionnelle commandable électroniquement. Une autre limite tient au bruit engendré par le débit accru des gaz, qui doit resté acceptable pour le confort du conducteur.

En plus de ces deux stratégies appliquées obligatoirement en période de ralenti, les phases R, P, A, et H sont définies par d'autres stratégies dont la description est la suivante.
La phase R de réchauffage thermique du pot catalytique correspond à l'application des stratégies de pilotage suivantes :
- retrait de l'avance à l'allumage, afin d'augmenter le débit et la température des gaz traversant le pot catalytique ;
- augmentation de la quantité d'air admise dans le collecteur, d'une valeur déterminée pour compenser la perte de couple du moteur provoquée par le retrait d'avance.
Cette valeur est limitée par l'ouverture maximale du boîtier papillon, ainsi que par l'objectif de consommation de carburant qui a pu être fixée lors de la mise au point du moteur.
- réglage de la richesse du mélange air-carburant admis dans le moteur, à une valeur supérieure ou égale à la stoechiométrie, par réglage du temps d'injection commandé par le calculateur électronique d'injection. Le réglage de la richesse est destiné à assurer une bonne combustion peu après le démarrage, la qualité de la combustion étant vérifiée par mesure des instabilités du régime moteur, par l'intermédiaire d'un estimateur d'instabilités. L'accroissement de la richesse peut atteindre 30%. Dès que le moteur le permet, la richesse est ramenée à la stoechiométrie.

La phase P de provocation thermique et chimique de l'amorçage du pot catalytique correspond à l'application des stratégies de pilotage suivantes :
- retrait de l'avance à l'allumage, pour augmenter le débit et la température des gaz traversant le pot catalytique ;
- augmentation de la quantité d'air admise dans le collecteur, d'une valeur déterminée par la perte de couple du moteur provoquée par le retrait d'avance, toujours limitée par l'ouverture maximale du boîtier papillon ;
- réglage de la richesse du mélange air-carburant admis dans le moteur, à une valeur inférieure ou égale à la stoechiométrie pour favoriser, dans le pot catalytique, des réactions chimiques d'oxydation des hydrocarbures et du monoxyde de carbone présents dans les gaz d'échappement.
Ces réactions chimiques étant plus exothermiques, elles améliorent le début de la montée en température du pot catalytique. Ce réglage de la richesse est obtenu par réglage du temps d'injection commandé par le calculateur électronique d'injection.

La phase A suivante d'accélération thermique et chimique de l'amorçage du pot catalytique correspond à l'application des stratégies de pilotage suivantes ;
- retrait de l'avance à l'allumage, comme précédemment;
- augmentation de la quantité d'air admise dans le collecteur, d'une valeur déterminée par la perte de couple du moteur provoquée par le retrait d'avance et limitée par l'ouverture maximale du boîtier papillon;
- réglage de la richesse moyenne du mélange air-carburant à une valeur égale à la stoechiométrie dans le but de faire fonctionner le pot catalytique avec une efficacité maximale vis à vis de tous les composants polluants des gaz d'échappement.
La richesse égale à la stoechiométrie provoque des réactions chimiques de réduction et d'oxydation des gaz d'échappement, par réglage du temps d'injection commandé par le calculateur électronique d'injection.
- réglage différencié du temps d'injection du carburant dans les différents cylindres du moteur, à des valeurs déterminées par la forte concentration en oxygène et en réducteurs, comme le monoxyde de carbone et les hydrocarbures imbrûlés, qu'il est souhaitable d'obtenir à l'échappement pour qu'ils subissent une combustion exothermique dans le pot catalytique.

La phase H de réchauffage rapide de l'habitacle est une variante du procédé de base comprenant deux au moins des quatre phases R, P, A et C, qui vise à l'amélioration du confort des passagers du véhicule. Elle correspond à l'application des stratégies de pilotage suivantes :
- application d'une avance à l'allumage supérieure à l'avance optimale, de valeur obtenue par la mesure de la vitesse de montée de la température d'eau du circuit de refroidissement du véhicule et déterminée pour favoriser les transferts thermiques entre ledit circuit et les cylindres.
Le pot catalytique étant en action, les degrés supplémentaires d'avance à l'allumage n'entraînent pas un accroissement de la pollution, mais permettent une montée en température du moteur plus rapide qu'en régime normal. La mesure de la vitesse de montée de la température d'eau du moteur est faite par le calculateur électronique de contrôle moteur.
- réglage de la richesse moyenne du mélange air-carburant à une valeur égale à la stoechiométrie provocant des réactions chimiques de réduction et d'oxydation des gaz d'échappement dans le pot catalytique, par réglage du temps d'injection commandé par le calculateur électronique d'injection.

Enfin, la phase C de réglage de la consommation en carburant du moteur à une valeur minimale correspond à l'application des stratégies de pilotage suivantes :
- application de l'avance à l'allumage optimale pour la consommation ;
- réglage de la richesse moyenne du mélange air-carburant à une valeur égale à la stoechiométrie provocant des réactions chimiques de réduction et d'oxydation des gaz d'échappement dans le pot catalytique, par réglage du temps d'injection commandé par le calculateur électronique d'injection, si la stabilité du moteur le permet. En cas de stabilité insuffisante, due par exemple à une température d'eau encore trop faible, on maintiendra la richesse du mélange à une valeur supérieure à la stoechiométrie, avant de revenir à la stoechiométrie dès que possible.

Grâce au découpage en différentes phases, il devient possible de modifier les paramètres de n'importe quelle stratégie de pilotage du moteur sans perturber d'autres réglages destinés à d'autres fins, et pris en charge par d'autres phases de mise en action. Ce découpage permet également de coordonner les différentes actions, toutes les actions visant un même but étant obligatoirement mises en oeuvre simultanément.

L'utilisation d'une variable ou compteur représentatif de l'énergie dégagée depuis le démarrage du moteur pour décider du passage d'une phase à l'autre, permet d'assurer des durées de stratégies qui sont adaptées physiquement à la diversité des profils de conduite. Ainsi, pour un moteur restant en régime de ralenti pendant un certain temps, le compteur varie lentement, allongeant la durée d'application des stratégies d'amorçage nécessaires pour augmenter efficacement la température du pot catalytique. Par contre, dans le cas d'un mode de conduite faisant monter rapidement le régime du moteur, le débit important des gaz d'échappement chauffera également rapidement le pot, et le compteur désactivera plus vite les stratégies d'amorçage, devenues inutiles, et généralement coûteuses en consommation de carburant.

Un point fondamental est le paramétrage des seuils de transition entre les phases, qui dépend de la température d'eau du moteur enregistrée au démarrage. Il permet une grande souplesse de réglage dans le choix de l'application des différentes phases, donc des différentes stratégies, en fonction de l'état initial du moteur. Lors d'un démarrage à très basse température, on peut considérer comme besoin prioritaire l'application d'une richesse supérieure à 1 pour minimiser la consommation en carburant, plutôt que l'application de stratégies d'amorçage du pot jugées alors inutiles et coûteuses en consommation. Dans ce cas précis, on pourra imposer le passage direct de la phase R de réchauffage thermique du pot catalytique à la phase C de réglage de la consommation du moteur en carburant à une valeur minimale, et on limitera ou inhibera par contre les phases d'amorçage du pot catalytique.
Lors des départs aux températures ambiantes les plus courantes, on peut juger nécessaire l'application des stratégies d'amorçage du pot catalytique et on programmera le passage par l'une ou plusieurs des phases prévues à cet effet.
Lors des départ avec un moteur chaud, on peut considérer que le risque d'émissions de polluants est limité, et on peut raccourcir ou supprimer les phases d'amorçage du pot, et se permettre de faire fonctionner au plus vite, voire immédiatement après le démarrage, le moteur dans la phase correspondant à une richesse et une consommation optimales.

## Revendications

1. Procédé de contrôle d'un moteur de véhicule automobile équipé d'un pot d'échappement des gaz résultant de la combustion du mélange air-carburant introduit dans le moteur, de type catalytique destiné à atteindre des objectifs de dépollution prédéterminés, l'allumage et l'injection du moteur étant pilotés électroniquement, comprenant un ensemble de stratégies de pilotage du fonctionnement du moteur, **caractérisé en ce que** le séquencement de ces différentes stratégies est géré par un automate, comprenant plusieurs phases distinctes de mise en action du moteur, correspondant chacune à l'application ou à la désactivation de chaque stratégie de pilotage, chaque phase étant comprise entre deux seuils de transition, minimal et maximal, qui sont définis par deux valeurs prises par une variable, appelée compteur (C_{E}), représentative de l'énergie dégagée par la combustion du mélange air-carburant dans le moteur depuis son démarrage, et qui varient en fonction de la température d'eau du moteur mémorisée au démarrage, et **en ce que** le positionnement dans une phase est déterminé par la valeur du compteur.

2. Procédé de contrôle selon la revendication 1, **caractérisé en ce que**, lorsque la température d'eau du moteur mémorisée au démarrage est telle que l'application de stratégies de pilotage du moteur est jugée nécessaire à l'obtention des objectifs de dépollution prédéterminés, le séquencement de ces stratégies comprend au moins deux phases de mise en action du moteur se déroulant dans l'ordre suivant :
- Phase (R) : réchauffage thermique du pot catalytique;
- Phase (C) : réglage de la consommation du moteur en carburant à une valeur minimale.

3. Procédé de contrôle selon la revendication 2, **caractérisé en ce que** le séquencement des stratégies de pilotage du fonctionnement du moteur comprend au moins une des deux phases supplémentaires suivantes, s'intercalant entre les phases (R) de réchauffage thermique et (C) de réglage de la consommation :
- Phase (P) : provocation thermique et chimique de l'amorçage du pot catalytique ;
- Phase (A) : accélération thermique et chimique de l'amorçage du pot catalytique ;

4. Procédé de contrôle selon les revendications 2 et 3, **caractérisé en ce que** le séquencement des stratégies de pilotage du fonctionnement du moteur comprend une phase (H) supplémentaire de réchauffage rapide de l'habitacle, s'intercalant entre les phases (A) d'accélération thermique et (C) de réglage de la consommation.

5. Procédé de contrôle selon l'une des revendications 1 à 4, **caractérisé en ce que** le compteur (C_{E}), représentatif de l'énergie dégagée par la combustion du mélange air-carburant dans le moteur depuis son démarrage, est une variable proportionnelle au nombre de révolutions effectuées par le moteur depuis son démarrage.

6. Procédé de contrôle selon l'une des revendications 1 à 4, **caractérisé en ce que** le compteur (C_{E}), représentatif de l'énergie dégagée par la combustion du mélange air-carburant dans le moteur depuis son démarrage, est une variable proportionnelle à la quantité de carburant consommée par le moteur depuis son démarrage.

7. Procédé de contrôle selon l'une des revendications 1 à 4, **caractérisé en ce que** le compteur (C_{E}), représentatif de l'énergie dégagée par la combustion du mélange air-carburant dans le moteur depuis son démarrage, est une variable proportionnelle à la quantité d'air admise dans le moteur depuis son démarrage.

8. Procédé de contrôle selon la revendication 5, **caractérisé en ce que** le nombre de révolutions effectuées par le moteur depuis son démarrage est délivré par un capteur de tours, à partir duquel est calculé le régime du moteur.

9. Procédé de contrôle selon la revendication 6, **caractérisé en ce que** la consommation de carburant par le moteur depuis son démarrage est calculée à partir des temps d'injection écoulés depuis le démarrage, ce calcul étant effectué par le calculateur d'injection.

10. Procédé de contrôle selon la revendication 7, **caractérisé en ce que** la quantité d'air admise dans le moteur depuis le démarrage est calculée à partir de l'information délivrée par un capteur de pression du collecteur d'admission d'air.

11. Procédé de contrôle selon la revendication 7, **caractérisé en ce que** la quantité d'air admise dans le moteur depuis le démarrage est calculée par un débitmètre placé dans le circuit d'admission d'air.

12. Procédé de contrôle selon l'une des revendications 2 à 4, **caractérisé en ce que**, dans le cas où le moteur du véhicule fonctionne avec un régime de ralenti, les phases (R), (P), (A) et (H) comprennent les stratégies de pilotage suivantes :
- augmentation du régime de ralenti du moteur ;
- augmentation de la quantité d'air admise au ralenti assurant l'augmentation du régime, dans la limite due à l'ouverture maximale du boîtier papillon placé à l'entrée du circuit d'admission d'air du moteur.

13. Procédé de contrôle selon l'une des revendications 2, 3 ou 12, **caractérisé en ce que** la phase (R) de réchauffage thermique du pot catalytique correspond de plus à l'application des stratégies de pilotage suivantes:
- retrait de l'avance à l'allumage ;
- augmentation de la quantité d'air admise dans le collecteur, d'une valeur déterminée par la perte de couple du moteur provoquée par le retrait d'avance et limitée par l'ouverture maximale du boîtier papillon;
- réglage de la richesse du mélange air-carburant admis dans le moteur, à une valeur supérieure ou égale à la stoechiométrie, par réglage du temps d'injection commandé par le calculateur électronique d'injection.

14. Procédé de contrôle selon l'une des revendications 3 ou 12, **caractérisé en ce que** la phase (P) de provocation thermique et chimique de l'amorçage du pot catalytique correspond de plus à l'application des stratégies de pilotage suivantes :
- retrait de l'avance à l'allumage ;
- augmentation de la quantité d'air admise dans le collecteur, d'une valeur déterminée par la perte de couple du moteur provoquée par le retrait d'avance ;
- réglage de la richesse du mélange air-carburant admis dans le moteur, à une valeur inférieure ou égale à la stoechiométrie provocant des réactions chimiques d'oxydation des gaz d'échappement dans le pot catalytique, par réglage du temps d'injection commandé par la calculateur électronique d'injection.

15. Procédé selon l'une des revendications 3 ou 12, **caractérisé en ce que** la phase (A) d'accélération thermique et chimique de l'amorçage du pot catalytique correspond de plus à l'application des stratégies de pilotage suivantes :
- retrait de l'avance à l'allumage ;
- augmentation de la quantité d'air admise dans le collecteur, d'une valeur déterminée par la perte de couple du moteur provoquée par le retrait d'avance et limitée par l'ouverture maximale du boîtier papillon;
- réglage de la richesse moyenne du mélange air-carburant à une valeur égale à la stoechiométrie provocant des réactions chimiques de réduction et d'oxydation des gaz d'échappement dans le pot catalytique, par réglage du temps d'injection commandé par le calculateur électronique d'injection;
- réglage différencié du temps d'injection du carburant dans les différents cylindres du moteur, à des valeurs déterminées par la concentration en oxygène et en réducteurs des gaz d'échappement destinés à subir une combustion exothermique dans le pot catalytique.

16. Procédé selon l'une des revendications 4 ou 12, **caractérisé en ce que** la phase (H) de réchauffage rapide de l'habitacle correspond de plus à l'application des stratégies de pilotage suivantes :
- application d'une avance à l'allumage supérieure à l'avance optimale, de valeur obtenue par la mesure de la vitesse de montée de la température d'eau du circuit de refroidissement du véhicule et déterminée par les transferts thermiques entre ledit circuit et les cylindres;
- réglage de la richesse moyenne du mélange air-carburant à une valeur égale à la stoechiométrie provocant des réactions chimiques de réduction et d'oxydation des gaz d'échappement dans le pot catalytique, par réglage du temps d'injection commandé par le calculateur électronique d'injection.

17. Procédé de contrôle selon l'une des revendications 3 ou 12, **caractérisé en ce que** la phase (C) de consommation minimale du moteur en carburant correspond à l'application des stratégies de pilotage suivantes :
- application de l'avance à l'allumage optimale pour la consommation ;
- réglage de la richesse moyenne du mélange air-carburant à une valeur égale à la stoechiométrie provocant des réactions chimiques de réduction et d'oxydation des gaz d'échappement dans le pot catalytique, par réglage du temps d'injection commandé par le calculateur électronique d'injection, dès que la stabilité du moteur le permet.

## Patentansprüche

1. Verfahren zur Ansteuerung eines Kraftfahrzeugmotors, der mit einem Auspufftopf ausgestattet ist, über den die durch die Verbrennung des in den Motor eingeführten Kraftstoff-Luft-Gemischs entstandenen Abgase abgeführt werden und der zum Erreichen vorbestimmter Ziele in Bezug auf die Umweltentlastung katalytisch ausgeführt ist, wobei die Zündung und die Einspritzung des Motors elektronisch gesteuert werden, umfassend eine Reihe von Strategien zur Steuerung des Motorbetriebs, **dadurch gekennzeichnet, dass** die Sequenzierung dieser verschiedenen Strategien von einem Automaten verwaltet werden, umfassend mehrere voneinander getrennte Phasen zum Antreiben des Motors, wobei jede der Anwendung oder der Deaktivierung einer jeweiligen dieser Steuerungsstrategien entspricht und wobei jede Phase zwischen zwei Übergangsschwellen, einer minimalen und einer maximalen, liegt, und diese beiden Übergangsschwellen durch zwei Werte definiert werden, die durch eine Zähler (C_{E}) genannte Variable bestimmt werden, welche die seit dem Start durch die Verbrennung des Kraftstoff-Luft-Gemischs im Motor freigesetzte Energie darstellt und in Abhängigkeit der beim Start gespeicherten Wassertemperatur des Motors variiert, und dass die Positionierung in einer Phase durch den Wert des Zählers bestimmt wird.

2. Ansteuerungsverfahren nach Anspruch 1, **dadurch gekennzeichnet, dass**, wenn die beim Starten des Motors gespeicherte Wassertemperatur derart ist, dass die Anwendung von Strategien zum In-Gang-Setzen des Katalysators zum Erreichen der vorbestimmten Ziele zur Reinigung der Abgase als notwendig erachtet wird, dann umfasst die Sequenzierung dieser Strategien wenigstens zwei Phasen zum Antreiben des Motors, die in der folgenden Reihenfolge ablaufen:
- Phase (R): Erwärmung des Katalysators;
- Phase (C): Regelung des Kraftstoffverbrauchs des Motors auf einen Mindestwert.

3. Ansteuerungsverfahren nach Anspruch 2, **dadurch gekennzeichnet, dass** die Sequenzierung der Strategien zur Steuerung des Motorbetriebs mindestens eine der beiden zusätzlichen folgenden Phasen umfasst, die zwischen der Phase (R) der thermischen Erwärmung und der Phase (C) der Regelung des Kraftstoffverbrauchs, eingeschoben wird:
- Phase (P): thermisches und chemisches Einwirken auf das In-Gang-Setzen des Katalysators;
- Phase (A): thermisches und chemisches Beschleunigen des In-Gang-Setzens des Katalysators.

4. Ansteuerungsverfahren nach den Ansprüchen 2 und 3, **dadurch gekennzeichnet, dass** die Sequenzierung der Strategien zur Steuerung des Motorbetriebs eine zusätzliche Phase H zur schnellen Erwärmung der Fahrgastkabine umfasst, die zwischen der Phase (A) zur thermischen Beschleunigung und der Phase (C) zur Regelung des Kraftstoffverbrauchs eingeschoben wird.

5. Ansteuerungsverfahren nach einem der Ansprüche 1 bis 4, **dadurch gekennzeichnet, dass** der Zähler (C_{E}), der die seit dem Start durch die Verbrennung des Kraftstoff-Luft-Gemischs im Motor freigesetzte Energie darstellt, eine Variable ist, die proportional zur Zahl der vom Motor seit seinem Start gemachten Umdrehungen ist.

6. Ansteuerungsverfahren nach einem der Ansprüche 1 bis 4, **dadurch gekennzeichnet, dass** der Zähler (C_{E}), der die seit dem Start durch die Verbrennung des Kraftstoff-Luft-Gemischs im Motor freigesetzte Energie darstellt, eine Variable ist, die proportional ist zur Menge des durch den Motor seit seinem Start verbrauchten Kraftstoffs.

7. Ansteuerungsverfahren nach einem der Ansprüche 1 bis 4, **dadurch gekennzeichnet, dass** der Zähler (C_{E}), der die seit dem Start durch die Verbrennung des Kraftstoff-Luft-Gemischs im Motor freigesetzte Energie darstellt, eine Variable ist, die proportional ist zur Menge an Luft, die in den Motor seit seinem Start angesaugt wurde.

8. Ansteuerungsverfahren nach Anspruch 5, **dadurch gekennzeichnet, dass** die Anzahl der Umdrehungen des Motors seit seinem Start von einem Drehzahlaufnehmer geliefert wird, auf Grund dessen die Drehzahl des Motors berechnet wird.

9. Ansteuerungsverfahren nach Anspruch 6, **dadurch gekennzeichnet, dass** der Kraftstoffverbrauch durch den Motor seit seinem Start aufgrund der seit dem Start abgelaufenen Einspritzungszeiten berechnet wird, wobei diese Berechnung durch den Einspritzrechner durchgeführt wird.

10. Ansteuerungsverfahren nach Anspruch 7, **dadurch gekennzeichnet, dass** die seit dem Start in den Motor eingeführte Menge Luft aufgrund der Information berechnet wird, die von einem Druckfühler in der Luftansaugleitung geliefert wird.

11. Ansteuerungsverfahren nach Anspruch 7, **dadurch gekennzeichnet, dass** die seit dem Start in den Motor eingeführte Menge Luft von einem im Ansaugluftkreislauf angeordneten Mengenmesser berechnet wird.

12. Ansteuerungsverfahren nach einem der Ansprüche 2 bis 4, **dadurch gekennzeichnete, dass** bei einem im Leerlauf drehenden Motor die Phasen (R), (P), (A) und (H) die folgenden Steuerungsstrategien umfassen:
- Erhöhung der Leerlaufdrehzahl des Motors;
- Erhöhung der Menge der im Leerlauf angesaugten Luft, damit die Leerlaufdrehzahl erhöht wird, wobei diese Erhöhung durch die maximale Öffnung des am Eingang des Ansaugluftkreislaufs angeordneten Drosselklappengehäuses begrenzt wird.

13. Ansteuerungsverfahren nach einem der Ansprüche 2, 3 oder 12, **dadurch gekennzeichnete, dass** die Phase (R) zur thermischen Erwärmung des Katalysators zusätzlich der Anwendung der folgenden Steuerungsstrategien entspricht:
- weniger Frühzündung;
- Erhöhung der Menge der in die Ansaugleitung angesaugten Luft um einen Wert, der durch die durch das Weniger an Frühzündung bewirkte Reduzierung des Drehmoments bestimmt und durch die maximale Öffnung des Drosselklappengehäuses begrenzt wird;
- durch Regelung der durch den elektronischen Einspritzrechner gesteuerten Einspritzzeit, Regelung des Luft-Kraftstoff-Verhältnisses des in den Motor eingeführten Gemischs auf einen Wert, der höher oder gleich dem stöchiometrischen Verhältnis ist.

14. Ansteuerungsverfahren nach einem der Ansprüche 3 oder 12, **dadurch gekennzeichnete, dass** die Phase (P) des thermischen und chemischen In-Gang-Setzens des Katalysators zusätzlich der Anwendung der folgenden Steuerungsstrategien entspricht:
- weniger Frühzündung;
- Erhöhung der Menge der in die Ansaugleitung angesaugten Luft um einen Wert, der durch die durch das Weniger an Frühzündung bewirkte Reduzierung des Drehmoments bestimmt wird;
- durch Regelung der durch den elektronischen Einspritzrechner gesteuerten Einspritzzeit, Regelung des Luftverhältnisses des in den Motor eingeführten Luft-Kraftstoff-Gemischs auf einen Wert, der kleiner oder gleich dem stöchiometrischen Verhältnis ist und der im Katalysator chemische Oxidationsreaktionen der Abgase hervorruft.

15. Verfahren nach einem der Ansprüche 3 oder 12, **dadurch gekennzeichnet, dass** die Phase (A) zur thermischen und chemischen Beschleunigung des In-Gang-Setzens des Katalysators zudem der Anwendung der folgenden Steuerungsstrategien entspricht:
- weniger Frühzündung;
- Erhöhung der Menge der in die Ansaugleitung angesaugten Luft um einen Wert, der durch die durch das Weniger an Frühzündung bewirkte Reduzierung des Drehmoments bestimmt wird und durch die maximale Öffnung des Drosselklappengehäuses begrenzt wird;
- Durch Regelung der durch den elektronischen Einspritzrechner gesteuerten Einspritzzeit, Regelung des mittleren Luftverhältnisses des Luft-Kraftstoff-Gemischs auf einen Wert, der dem stöchiometrischen Verhältnis gleichkommt und der chemische Reduktions- und Oxidationsreaktionen der Abgase im Katalysator hervorruft.
- differenzierte Regelung der Einspritzzeit des Kraftstoffs in die verschiedenen Motorzylinder auf Werte, die durch den hohen Anteil an Sauerstoff und an Reduktionsmitteln in den zur exothermischen Verbrennung im Katalysator vorgesehenen Abgasen bestimmt werden.

16. Verfahren nach einem der Ansprüche 4 oder 12, **dadurch gekennzeichnet, dass** die Phase (H) der schnellen Erwärmung der Fahrgastkabine zudem der Anwendung der folgenden Steuerungsstrategien entspricht:
- mehr Frühzündung als optimal wäre, wobei der Wert dieser Frühzündung durch das Messen der Geschwindigkeit des Temperaturanstiegs des Wassers im Kühlkreislauf des Fahrzeugs erzielt wird, und durch die Wärmeübertragungen zwischen dem Kühlkreislauf und den Zylindern bestimmt wird;
- durch Regelung der durch den elektronischen Einspritzrechner gesteuerten Einspritzzeit, Regelung des mittleren Luftverhältnisses des Luft-Kraftstoff-Gemischs auf einen dem stöchiometrischen Verhältnis entsprechenden Wert, wodurch chemische Reduktions- und Oxidationsreaktionen der Abgase im Katalysator hervorgerufen werden.

17. Ansteuerungsverfahren nach einem der Ansprüche 3 oder 12, **dadurch gekennzeichnet, dass** die Phase (C) des minimalen Kraftstoffverbrauchs des Motors der Anwendung der folgenden Steuerungsstrategien entspricht:
- für den Kraftstoffverbrauch optimale Frühzündung;
- durch Regelung der durch den elektronischen Einspritzrechner gesteuerten Einspritzzeit, sobald die Stabilität des Motors es erlaubt, Regelung des mittleren Luftverhältnisses des Luft-Kraftstoff-Gemischs auf einen dem stöchiometrischen Verhältnis entsprechenden Wert, wodurch chemische Reduktions- und Oxidationsreaktionen der Abgase im Katalysator hervorgerufen werden.

## Claims

1. Method for control of an engine of an automotive vehicle equipped with an exhaust for the gases resulting from combustion of the air-fuel mixture introduced into the engine, of the catalytic type, intended to achieve predetermined depolluting objectives, the ignition and injection of the engine being electronically controlled, comprising a set of strategies for controlling the operation of the engine, **characterised in that** the sequencing of the different strategies is managed by a controller, comprising several distinct phases of activation of the engine, each corresponding to the application or deactivation of each control strategy, each phase being inclusive between two transition thresholds, minimum and maximum, that are defined by two values taken by a variable, known as a counter (C_{E}) representative of the energy released by the combustion of the air-fuel mixture in the engine since it was started, and which vary according to the engine water temperature memorised when the engine is started, and **in that** positioning in each phase is determined by the counter value.

2. Method of control according to claim 1, **characterised in that** when the engine water temperature memorised when the engine is started is such that application of engine control strategies is judged to be necessary to achieve the predetermined depolluting objectives, the sequencing of these strategies comprises at least two phases of activation of the engine, taking place in the following order:
- Phase (R): thermal heating of the catalytic converter;
- Phase (C): adjustment of the engine fuel consumption to a minimum value;

3. Method of control according to claim 2, **characterised in that** the sequencing of engine operation control strategies comprise at least one of the following two supplementary phases, interposed between phases (R) of thermal heating and (C) of adjustment of consumption:
- Phase (P): thermal and chemical inducement of the priming of the catalytic converter;
- Phase (A): thermal and chemical acceleration of priming of the catalytic converter;

4. Method of control according to claims 2 and 3, **characterised in that** the sequencing of the engine operation control strategies comprises a supplementary phase (H) of rapid heating up of the passenger compartment, interposed between the phases (A) of thermal acceleration and (C) of adjustment of consumption.

5. Method of control according to one of claims 1 to 4, **characterised in that** the counter (C_{E}) representative of the energy released by combustion of the air-fuel mixture in the engine since it was started is a variable proportional to the number of revolutions performed by the engine since it was started.

6. Method of control according to one of claims 1 to 4, **characterised in that** the counter (C_{E}) representative of the energy released by combustion of the air-fuel mixture in the engine since it was started is a variable proportional to the quantity of fuel consumed by the engine since it was started.

7. Method of control according to one of claims 1 to 4, **characterised in that** the counter (C_{E}) representative of the energy released by combustion of the air-fuel mixture in the engine since it was started is a variable proportional to the quantity of air admitted into the engine since it was started.

8. Method of control according to claim 5, **characterised in that** the number of revolutions performed by the engine since it was started is supplied by a turnover sensor, from which the engine speed is calculated.

9. Method of control according to claim 6, **characterised in that** the consumption of fuel by the engine since it was started is calculated from the injection times elapsed since the engine was started, this calculation being performed by the injection computer.

10. Method of control according to claim 7, **characterised in that** the quantity of air admitted into the engine since it was started is calculated from the data supplied by a pressure sensor of the air intake manifold.

11. Method of control according to claim 7, **characterised in that** the quantity of air admitted into the engine since it was started is calculated by an airflow meter placed in the air intake system.

12. Method of control according to one of claims 2 to 4, **characterised in that** where the engine of the vehicle operates at idling speed, the phases (R), (P), (A) and (H) comprise the following control strategies:
- increase in the idling speed of the engine;
- increase in the quantity of air admitted when idling providing increase in the speed, to the limit due to maximum opening of the throttle housing placed at the inlet of the engine air intake system.

13. Method of control according to one of claims 2, 3 or 12, **characterised in that** the phase (R) of thermal heating up of the catalytic converter corresponds moreover to the application of the following control strategies:
- withholding the ignition advance;
- increasing the quantity of air admitted into the manifold by a value determined by the loss of engine torque caused by withholding the ignition advance and limited by the maximum opening of the throttle housing;
- adjustment of the richness of the air-fuel mixture admitted into the engine to a value greater than or equal to stoichiometry, by adjusting the injection time controlled by the electronic injection computer.

14. Method of control according to one of claims 3 or 12, **characterised in that** the phase (P) of thermal and chemical induction of priming of the catalytic converter corresponds moreover to application of the following control strategies:
- withholding the ignition advance;
- increasing the quantity of air admitted into the manifold by a value determined by the loss of engine torque caused by withholding the advance;
- adjustment of the richness of the air-fuel mixture admitted into the engine to a value less than or equal to stoichiometry, causing chemical reactions of oxidation of the exhaust gases in the catalytic converter by adjusting the injection times controlled by the electronic injection computer.

15. Method according to one of claims 3 or 12, **characterised in that** the phase (A) of thermal and chemical acceleration of priming of the catalytic converter corresponds moreover to the application of the following control strategies:
- withholding the ignition advance;
- increase in the quantity of air admitted into the manifold by a value determined by the loss of engine torque caused by withholding the advance and limited by the maximum opening of the throttle housing;
- adjustment of the average richness of the air-fuel mixture to a value equal to stoichiometry, causing chemical reactions of reduction and oxidation of the exhaust gases in the catalytic converter, by adjusting the injection times controlled by the electronic injection computer;
- differentiated adjustment of the times for injection of fuel into the different cylinders of the engine to values determined by the concentration of oxygen and reducing agents in the exhaust gases intended to undergo exothermal combustion in the catalytic converter.

16. Method according to one of claims 4 or 12, **characterised in that** the phase (H) of rapid heating up of the passenger compartment corresponds moreover to application of the following control strategies:
- application of an ignition advance greater than the optimum advance if a value obtained by measuring the speed of increase in the cooling water temperature of the cooling system of the vehicle, and determined by the thermal transfers between said system and the cylinders;
- adjustment of the average richness of the air-fuel mixture to a value equal to stoichiometry, causing chemical reactions of reduction and oxidation of the exhaust gases in the catalytic converter, by adjusting the injection time controlled by the electronic injection computer.

17. Method of control according to one of claims 3 or 12, **characterised in that** the phase (C) of minimum engine fuel consumption corresponds to application of the following control strategies:
- application of the ignition advance optimum for consumption;
- adjustment of the average richness of the air-fuel mixture to a value equal to stoichiometry, causing chemical reactions of reduction and oxidation of the exhaust gases in the catalytic converter, by adjusting the injection time controlled by the electronic injection computer once the stability of the engine allows it.
